# EUROPEAN PATENT APPLICATION

(11) **EP 4 521 298 A1**
(43) Date of publication of application: **12.03.2025**
(21) Application number: 23195309.2
(22) Date of filing: 05.09.2023
(51) Int. Cl.: G06N 3/0495, G06N 3/096, G10L 15/06, G10L 25/30, G10L 25/51, G06N 3/084, G08B 21/02, G10L 25/78

(54) **MACHINE-LEARNING MODEL TRAINING**

(71) Applicant: Koninklijke Philips N.V., 5656 AG Eindhoven (NL)
(72) Inventor: HUSSAIN, Mohammed, Eindhoven (NL); KUMAR, Mohit, Eindhoven (NL); PATIL, Ravindra Balasaheb, Eindhoven (NL); GUTTA, Srinivas, Eindhoven (NL)
(74) Representative: Philips Intellectual Property & Standards

(57) **Abstract**

Proposed concepts thus aim to provide schemes, solutions, concept, designs, methods and systems pertaining to training a machine-learning model for detecting audio of a target classification. In particular, embodiments aim to provide a method for training a machine-learning model for detecting audio of a target classification by performing quantization-aware training on a pre-trained audio-classification machine-learning model using training data including at least one audio signal comprising audio meeting the target classification.

## Description

### FIELD OF THE INVENTION

This invention relates to the field of training a machine-learning model, and more specifically, to the field of training a machine-learning model to detect audio of a target classification.

### BACKGROUND OF THE INVENTION

More than 130 million babies are born globally each year. The baby monitor market is a billion-dollar industry and is driven by increasing child safety concerns, innovation in video and internet technologies, and a growing number of working parents living in nuclear families. These monitors generally consist of a baby unit - which is usually placed on or near the crib of the baby; and a parent unit - which receives audio and/or a video feed from the baby unit. Some of the features available in baby monitors are infrared vision, temperature sensors, recording capabilities, etc. Some monitors can also play lullabies on the baby unit and have two-way communication ability for the parent to talk or calm the baby.

Most of the baby monitors only provide an audio and video feed which the parent must continuously listen to and watch. Automatically identifying in real time and alerting the parents when the baby is crying would be an enhancement over existing monitors.

Classical approaches for cry detection consist of extracting distinct features from audio signals and using these features to train a machine-learning model for detecting cries. Time domain and frequency domain features are commonly used for cry detection. Frequency domain features are generally more robust than time domain features and are thus widely used. Apart from time domain and frequency domain features, prosodic features are also used for cry detection.

Cepstral analysis is widely used for speech processing because of its ability to perfectly symbolize speech waveforms and characteristics with a limited size of features. Mel frequency cepstral coefficient (MFCC) is a cepstral representation of the audio and is the most commonly used as a feature in speech recognition systems. Linear prediction cepstral coefficient (LPCC) involves predicting next values by linear combination of previous coefficients. Linear frequency cepstral coefficient (LFCC) uses linear instead of Mel filter bank. LFCC performs better than MFCC in discriminating high frequency audio signals such as female voices and baby cry signals.

Using such features, classification of whether a baby is crying or not can be done by training them on traditional machine-learning classifiers or neural network-based models. Traditional machine-learning models include support vector machines (SVM), K-Nearest neighbors (KNN), Random Forest, XGBoost, etc. which can all be used to classify. Neural network-based models on the other hand include Feed Forward Neural Network (FFNN), Convolutional Neural Networks (CNN), Recurrent Neural Networks (RNN), and Long Short-Term Memory (LSTM), etc.

These existing approaches, however, are not optimized to run well with low processing power, such as on a baby monitor.

### SUMMARY OF THE INVENTION

The invention is defined by the claims.

According to examples in accordance with an aspect of the invention, there is provided a method for training a machine-learning model for detecting audio of a target classification.

The method comprises: training, on a set of training data, a pre-trained audio-classification machine-learning model to predict whether an input audio signal comprises audio meeting a target classification, wherein the set of training data comprises at least one audio signal comprising audio meeting the target classification; and characterized in that, the training comprises quantization-aware training wherein at least one learnable value or activation of the model is quantized.

Proposed concepts thus aim to provide schemes, solutions, concept, designs, methods and systems pertaining to training a machine-learning model for detecting audio of a target classification. In particular, embodiments aim to provide a method for training a machine-learning model for detecting audio of a target classification by performing quantization-aware training on a pre-trained audio-classification machine-learning model using training data including at least one audio signal comprising audio meeting the target classification.

In other words, it is proposed that by taking a pre-trained audio-classification machine-learning model and training it further using quantization-aware training, a machine-learning model capable of classifying audio of a target classification can be provided that is lighter-weight than the original pre-trained model but still capable of accurately performing the target classification.

By using quantization to reduce the computational load of determining links between layers in the AI model (i.e., by limiting the representation space needed to represent numbers, e.g. by truncating a number after the first decimal or limiting the number grey values in a grey scale), a computationally-lighter and smaller machine-learning model that is still capable of classifying audio of a target classification can be provided.

This invention may be of particular use therefore in training models that can be deployed in computationally-simple devices, such as, for example, baby monitors. In this way devices can run the further-trained machine-learning model to detect audio of a certain target classification without excessive computational resources or connection to a cloud. For example, a baby monitor could be provided including a model trained according to the present invention to detect audio of a baby/infant crying.

As audio classification is a computationally demanding task, a model that is capable of classifying audio into a large variety of classifications necessarily must be large and computationallyheavy. By further training a pre-trained audio-classification machine-learning model to essentially reduce it to only classifying audio of a target classification, the model may accordingly be reduced in size and computational-demand without making significant sacrifices to its accuracy in classifying audio of the target classification.

In summary, by essentially taking a piece of an audio-classification model that has already been trained and reusing it in a new model, the significant computing power and quantity of labelled training data that is needed in training a new model from scratch can be avoided. Further, by using quantization-aware training to train the `new model', the size and computational-demand of the new model can be reduced such that it may be implemented in computationally-simple devices.

Ultimately, an improved method for training a machine-learning model for detecting audio of a target classification is provided by the present invention.

In some embodiments, the at least one learnable value may comprise at least one of a node weight; a bias; a batch normalization parameter; a gating or masking parameter; and a threshold. These are all examples of learnable values which may be quantized to reduce their numerical precision. These parameters each contribute to the size, memory footprint, and computational efficiency of the model during deployment.

In some embodiments, the target classification may comprise an infant crying. This facilitates the model being trained to detect audio of an infant crying. The model may then subsequently be deployed in a baby monitor.

In some embodiments, the set of training data may comprise at least one audio signal not meeting the target classification. This has been found to provide a more robust model as it has been trained on a wider variety of sounds and thus can more effectively differentiate between infants crying and other sounds. In particular, sounds that are similar to an infant crying (such as cats meowing, babies and adults laughing, doors creaking, etc.) are useful to include in training data as well as sounds that are more distinctly different (such as washing machines, alarm clocks, etc.).

In some embodiments, prior to training, the method may further comprise converting the audio signals of the set of training data to float tensors. This facilitates the use of a wider variety of machine-learning models.

In some embodiments, prior to training, the method may further comprise resampling the audio signals of the set of training data to 16kHz single-channel audio signals. This increases the efficiency and/or effectiveness of the training as it homogenises the audio signals in terms of sampling frequency and number of channels.

In some embodiments, the method may further comprise obtaining the set of training data.

According to another aspect of the invention, there is provided a computer program comprising code means for implementing the method of any herein disclosed method when said program is run on a processing system.

According to another aspect of the invention, there is provided a computer program comprising code means for implementing a machine-learning model trained according to any herein disclosed method.

According to another aspect of the invention, there is provided a device comprising a machine-learning model trained according to any herein disclosed method for training a machine-learning model for detecting audio of a target classification. A device capable of detecting audio of a target classification is thereby provided.

In some embodiments, the device may be configured to, in response to detecting audio of the target classification, output a control signal. In this way, the device may perform a specific action in response to detecting audio of the target classification. The control signal may be to control the device itself and/or an external device/system.

In some embodiments, the control signal may comprise a signal for outputting an alert. In this way, in response to detecting audio of the target classification (for example, an infant crying), an alert can be output on the device itself and/or an alert can be sent to an external device/system such as a parent's smartphone.

In some embodiments, the device may be configured to classify audio signals in real-time. For instance, the machine-learning model can be running on the device such that the device is capable of detecting audio of the target classification in real-time, and therefore, potentially reacting to the detection in real-time.

In some embodiments, the device may comprise a baby monitor. This is a computationally-simple device that would benefit from comprising a light-weight model trained according to any herein disclosed embodiment of the above-described method.

In some embodiments, the device may consist of a processor. In this way, a processor comprising a machine-learning model trained according to any herein disclosed embodiment of the above-described method can be provided that can then be utilised in a variety of systems/devices.

Thus, there may be proposed concepts for training a machine-learning model for detecting audio of a target classification, and this may be done based on training a pre-trained audio-classification machine-learning model using quantization-aware training.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified flow diagram of a method for training a machine-learning model for detecting audio of a target classification according to a proposed embodiment;
Fig. 2 is a flow diagram of a method for training a machine-learning model for detecting audio of a target classification according to a proposed embodiment;
Fig. 3 is a diagram for explaining a method for training a machine-learning model for detecting audio of a target classification according to a proposed embodiment;
Fig. 4 is a diagram for explaining a method for deploying a machine-learning model for detecting audio of an infant crying according to a proposed embodiment;
Fig. 5A is a simplified block diagram of a device comprising a machine-learning model trained according to a proposed embodiment;
Fig. 5B is a simplified block diagram of a baby monitor comprising a machine-learning model and configured to output a control signal according to a proposed embodiment; and
Fig. 6 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to training a machine-learning model for detecting audio of a target classification. According to proposed concepts, a number of possible solutions may be implemented separately or jointly. That is, although these possible solutions may be described below separately, two or more of these possible solutions may be implemented in one combination or another.

Embodiments of the invention aim to provide a method for training a machine-learning model for detecting audio of a target classification. This can be achieved by training a pre-trained audio-classification machine-learning model using quantization-aware training.

Proposed concepts thus aim to provide schemes, solutions, concept, designs, methods and systems pertaining to training a machine-learning model for detecting audio of a target classification. In particular, embodiments aim to provide a method for training a machine-learning model for detecting audio of a target classification by performing quantization-aware training on a pre-trained audio-classification machine-learning model using training data including at least one audio signal comprising audio meeting the target classification.

In other words, it is proposed that by taking a pre-trained audio-classification machine-learning model and training it further using quantization-aware training, a machine-learning model capable of classifying audio of a target classification can be provided that is lighter-weight than the original pre-trained model but still capable of accurately performing the target classification.

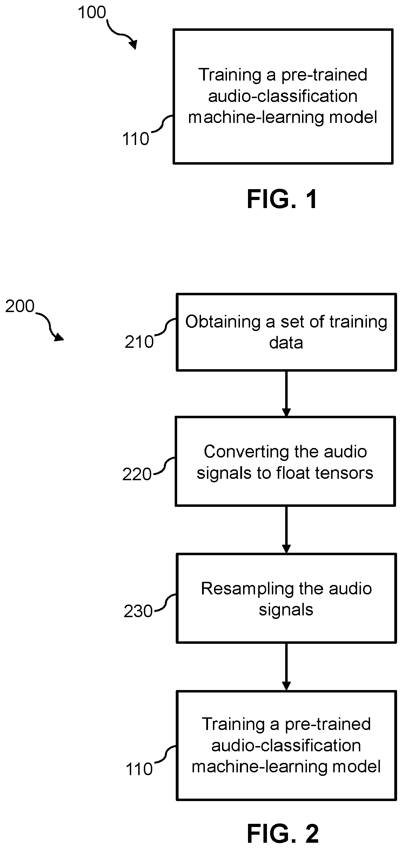

Referring now to Fig. 1, there is depicted a simplified flow diagram of a method 100 for training a machine-learning model for detecting audio of a target classification according to a proposed embodiment.

The method 100 comprises the step 110 of training, on a set of training data, a pre-trained audio-classification machine-learning model to predict whether an input audio signal comprises audio meeting the target classification, wherein the set of training data comprises at least one audio signal comprising audio meeting the target classification. The training comprises quantization-aware training wherein at least one learnable value or activation of the model is quantized. An audio signal comprising audio meeting the target classification can also be understood as an audio signal of the target classification or an audio signal within the target classification. An audio signal comprising audio meeting the target classification can be understood as an audio signal that comprises at least some audio matching/meeting the target classification, and does not prohibit the audio signal also including audio which does not meet the target classification, such as background noise.

Quantization-aware training can be understood as a way to prepare machine-learning models (or neural networks) for deployment on hardware with limited numerical precision. The goal of quantization-aware training is to make machine-learning models more robust to the reduced precision of computations involved in these hardware environments while minimizing the loss of model accuracy.

Machine-learning models are typically trained using 32-bit floating-point numbers (single precision) or even 64-bit (double precision), which provide high precision but require significant memory and computational resources. However, many hardware platforms, especially in embedded systems or mobile devices, use lower-precision data types like 8-bit integers for calculations due to their reduced memory requirements and faster computation speeds.

Quantization refers to the process of mapping a range of continuous values to a smaller set of discrete values. In the context of machine-learning models, quantization involves converting the high-precision floating-point weights and activations of the network to lower-precision integer representations.

A learnable parameter, also known as a trainable parameter or a parameter to be learned, is a value within a machine-learning model that the model adjusts during the training process. These parameters are the core components that allow a machine-learning model, particularly neural networks, to adapt and improve its performance on a specific task.

In a machine-learning model, learnable parameters are values that the model updates iteratively as it learns from the input data. The model learns to adjust these parameters in order to minimize the difference between its predictions and the actual target values in the training data. The process of updating these parameters is typically achieved through optimization algorithms, such as gradient descent and its variants.

In this embodiment, the at least one learnable value comprises at least one of a node weight; a bias; a batch normalization parameter; a gating or masking parameter; and a threshold. These are all examples of learnable values which may be quantized to reduce their numerical precision. These parameters each contribute to the size, memory footprint, and computational efficiency of the model during deployment. In other embodiments, the at least one learnable value may comprise any suitable learnable parameter.

An activation of the model can be understood as the outputs of each layer in the neural network (i.e., intermediate layers as well as the final layer). The final output of the machine-learning model is therefore encompassed by the term `activation'. Quantization of activations can significantly reduce memory and computation requirements during inference.

In this way, an optimized and light-weight machine-learning model can be provided that is able to accurately detect audio of a target classification while being robust to various background noises such as a TV, a door opening or closing, a tap running, etc. In other words, the model is still able to accurately detect audio of a target classification even when the audio meeting the target classification is relatively quiet.

Referring now to Fig. 2, there is depicted a flow diagram of a method 200 for training a machine-learning model for detecting audio of a target classification according to a proposed embodiment.

Step 110 is substantially the same as has been described in relation to the method 100 in Fig. 1. In step 210, the set of training data is obtained. This allows the method to be more self-contained, not having to rely on a third party to provide the set of training data. In this embodiment, the set of training data comprises at least one audio signal not meeting the target classification. This has been found to provide a more robust model as it has been trained on a wider variety of sounds and thus can more effectively differentiate between infants crying and other sounds. In particular, sounds that are similar to an infant crying (such as cats meowing, babies and adults laughing, doors creaking, etc.) are useful to include in training data as well as sounds that are more distinctly different (such as washing machines, alarm clocks, etc.). This feature is not essential, however, and in other embodiments, the set of training data can exclusively comprise audio signals meeting the target classification.

Further, in this embodiment, the target classification comprises an infant crying. This facilitates the model being trained to detect audio of an infant crying. The model can then subsequently be deployed in a baby monitor. The use of a such a baby monitor could have a significant impact on the well-being of the baby as well as the parents/guardians as they would no longer have to actively listen and be aware of the baby monitor's audio/video feed to manually detect whether their baby is crying. The parents/guardians are therefore free to have their attention elsewhere, and furthermore, the machine-learning model may detect crying that the parents/guardians would have otherwise missed.

In step 220, the audio signals of the set of training data are converted to float tensors. This facilitates the use of a wider variety of machine-learning models. In step 230, the audio signals of the set of training data are resampled to 16kHz single-channel audio signals, i.e., 16kHz mono audio signals. This increases the efficiency and/or effectiveness of the training as it homogenises the audio signals in terms of sampling frequency and number of channels Either or both of steps 220 and 230 may be skipped in other embodiments. Furthermore, in other embodiments, the order of steps 220 and 230 can be reversed.

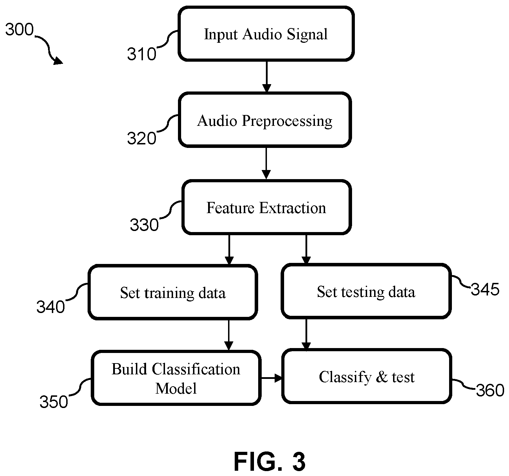

Referring now to Fig. 3, there is depicted a diagram for explaining a method 300 for training a machine-learning model for detecting audio of a target classification according to a proposed embodiment.

For instance, an example of a pre-trained audio-classification machine-learning model is YAMNet. YAMNet is a pretrained deep net that predicts 521 audio event classes based on the AudioSet-YouTube^{™} corpus and employing the Mobilenet_v1 depthwise-separable convolutional architecture.

The audio signals input in step 310 can be audio signals from open-source datasets. For instance, the donateacry dataset contains baby (infant) crying sounds due to various reasons such as being hungry, tired, burping, belly pain and discomfort. Another dataset is ESC-50 which consists of fifty classes. This dataset consists of 2000 audio signals of 5-seconds duration each. For the present training purpose, a sample of the ESC-50 dataset can be used such that there are more audio files from the target classification and fewer from other classes. In some cases, only audio files from the target classification may be taken. In this case, the target classification is an infant crying.

In step 320, audio pre-processing is performed on the .wav audio files (signals) by first converting each of them to a float tensor and then resampling each of them to 16 kHz single-channel audio.

Feature extraction is an important step 330 for analysing the data. The audio data is a 3D signal which represents time, amplitude and frequency. Since the 3D format cannot be directly processed by AI models, the feature extraction approach is used. YAMNet was trained with audio features computed as follows:
- All audio is resampled to 16 kHz mono.
- A spectrogram is computed using magnitudes of the Short-Time Fourier Transform with a window size of 25ms, a window hop of 10ms, and a periodic Hann window.
- A mel spectrogram is computed by mapping the spectrogram to 64 mel bins covering the range 125-7500Hz.
- A stabilized log mel spectrogram is computed by applying log (mel-spectrum + 0.001) where the offset is used to avoid taking a logarithm of zero.

These features are then framed into 50%-overlapping examples of 0.96 seconds, where each example covers 64 mel bands and 96 frames of 10ms each. These 96x64 patches are then fed into Mobilenet_v1 model to yield a 3x2 array of activations for 1024 kernels at the top of the convolution. These are averaged to give a 1024-dimension embedding, then put through a single logistic layer to get the 521 per-class output scores corresponding to the 960ms input waveform segment. Because of the window framing, you need at least 975ms of input waveform to get the first frame of output scores.

Every audio signal consists of multiple features. However, the characteristics that are relevant to the problem-at-hand must be extracted. Using these audio features, intelligent audio classification models can then be built.

Training a new model from scratch requires a lot of labelled training data and a lot of computing power. Transfer learning is a technique that shortcuts much of this by taking a piece of a model that has already been trained on a related task and essentially reusing it a new model. For instance, YAMNet can be used as a high-level feature extractor - the 1024-D embedding output of YAMNet can be used as the input features of another shallower model which can then be trained on a small amount of data for a particular task. This facilitates the quick creation of specialized audio classifiers without requiring a lot of labelled data and without having to train a large model end-to-end.

Towards this end, the YAMNet model can essentially be used to train a new model. The YAMNet model is used to extract the embeddings (features) from the audio files (step 330) and then a model is built in step 350 using a portion of the embeddings from the audio files (the embeddings can be split into training data, step 340, and testing data, step 345).

This new model can then be used to score the testing data in step 360 (which could be, for example, the audio files from the donateacry dataset) to validate the model's performance. The resulting model is thus lightweight and can be deployed on the chip as well as on the cloud.

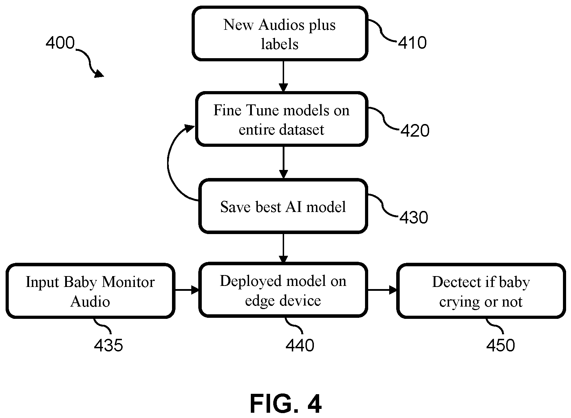

Referring now to Fig. 4, there is a diagram for explaining a method 400 for deploying a machine-learning model for detecting audio of an infant crying according to a proposed embodiment. Essentially, the flow from deployment to production is shown in method 400. A machine-learning model trained according to any herein-disclosed method can be considered a base model, which can subsequently be retrained/fine-tuned in step 420 based on new labelled audio files provided in step 410. Using the new audio datasets to fine tune the model and its efficacy allows the best AI model to be saved in step 430. The model update is an iterative process where the model is continuously retrained and finetuned, and the best can continuously be deployed to an edge device in step 440.

In this example, where the model is for detecting baby/infant cries, baby monitor audio can be input into the deployed model in step 435. In other words, in the production phase, the microphone of a baby monitor can take real time audio as input and pass it over to the latest iteration of the model, which can then process the audio to detect if the baby is crying or not in step 450. In some cases, one or more similar models may be deployed on the edge device (e.g. a baby monitor) but for classifying video files and/or other ambient information such as temperature, lighting, etc. They may all work together to produce a single indication of detection of a certain classification, or they may each provide their own detections.

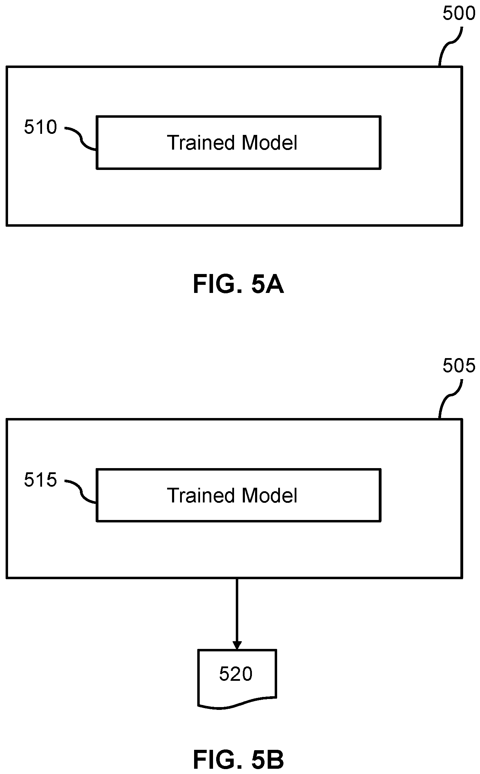

Referring now to Fig. 5A, there is depicted a device 500 comprising a machine-learning model 510 trained according to a proposed embodiment. The device 500 comprises a model 510 trained according to any herein disclosed method for training a machine-learning model for detecting audio of a target classification (e.g., method 100 or 200).

For instance, the device 500 can comprise a computer program comprising code means for implementing a machine-learning model 510 trained according to any herein disclosed method.

In this embodiment, the device 500 is configured to classify audio signals in real-time. For instance, the machine-learning model 510 can be running on the device such that the device is capable of detecting audio of the target classification in real-time, and therefore, potentially reacting to the detection in real-time. This is not essential to the working of the device 500, however, e.g., the device may analyse any received audio signals with the trained model 510 at a later time or with a slight delay.

In this embodiment, the device 500 consists of a processor. The processor 500 can then be utilised in a variety of systems/devices.

Referring now to Fig. 5B, there is depicted a simplified block diagram of a device 505 comprising a machine-learning model 515 and configured to output a control signal 520 according to a proposed embodiment. In this embodiment, the device 505 comprises a baby monitor. This is a computationally-simple device that would benefit from comprising a light-weight model 515 trained according to any herein disclosed embodiment of the above-described method. Accordingly, the machine-learning model 515 has been trained to detect audio of a target classification, wherein the target classification is an infant crying.

In response to detecting audio of an infant crying, the device 505 is configured to output a control signal 520. In this way, the device 505 can perform a specific action in response to detecting an infant crying. The control signal may be to control the device 505 itself and/or an external device/system.

Further, in this embodiment, the control signal 520 comprises a signal for outputting an alert. In other words, the control signal 520 comprises an alert signal. In this way, in response to detecting audio of an infant crying, an alert can be output on the device itself and/or an alert can be sent to an external device/system such as a parent's smartphone.

Of course, in other embodiments, a same or different control signal 520 can be output in response to detecting audio of other target classifications too. Further, as mentioned above, the control signal need not necessarily comprise an alert, but rather, can be for controlling environmental lighting, audio, devices, etc.

In some embodiments, the baby monitor 505 can keep historical track record of the time and duration of an infant crying.

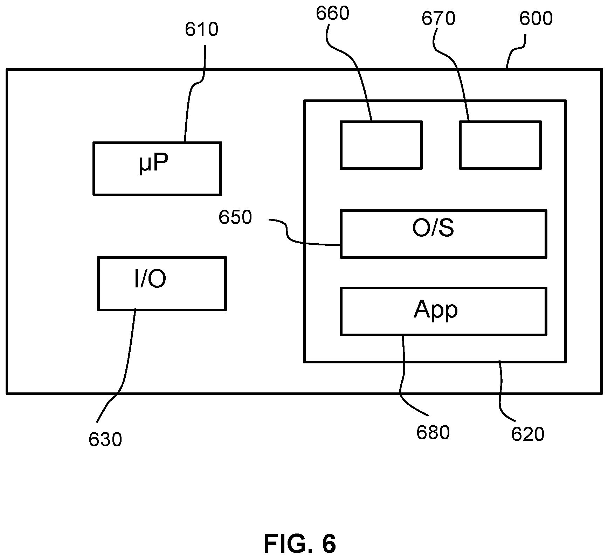

Fig. 6 illustrates an example of a computer 600 within which one or more parts of an embodiment may be employed. Various operations discussed above may utilize the capabilities of the computer 600. In this regard, it is to be understood that system functional blocks can run on a single computer or may be distributed over several computers and locations (e.g. connected via internet).

The computer 600 includes, but is not limited to, PCs, workstations, laptops, PDAs, palm devices, servers, storages, and the like. Generally, in terms of hardware architecture, the computer 600 may include one or more processors 610, memory 620 and one or more I/O devices 630 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 610 is a hardware device for executing software that can be stored in the memory 620. The processor 610 can be virtually any custom made or commercially available processor, a central processing unit (CPU), a digital signal processor (DSP), or an auxiliary processor among several processors associated with the computer 600, and the processor 610 may be a semiconductor based microprocessor (in the form of a microchip) or a microprocessor.

The memory 620 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 620 may incorporate electronic, magnetic, optical, and/or other types of storage media. Note that the memory 620 can have a distributed architecture, where various components are situated remote from one another, but can be accessed by the processor 610.

The software in the memory 620 may include one or more separate programs, each of which comprises an ordered listing of executable instructions for implementing logical functions. The software in the memory 620 includes a suitable operating system (O/S) 650, compiler 660, source code 670, and one or more applications 680 in accordance with exemplary embodiments. As illustrated, the application 680 comprises numerous functional components for implementing the features and operations of the exemplary embodiments. The application 680 of the computer 600 may represent various applications, computational units, logic, functional units, processes, operations, virtual entities, and/or modules in accordance with exemplary embodiments, but the application 680 is not meant to be a limitation.

The operating system 650 controls the execution of other computer programs, and provides scheduling, input-output control, file and data management, memory management, and communication control and related services. It is contemplated by the inventors that the application 680 for implementing exemplary embodiments may be applicable on all commercially available operating systems.

Application 680 may be a source program, executable program (object code), script, or any other entity comprising a set of instructions to be performed. When a source program, then the program is usually translated via a compiler (such as the compiler 660), assembler, interpreter, or the like, which may or may not be included within the memory 620, so as to operate properly in connection with the O/S 650. Furthermore, the application 680 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 630 may include input devices such as, for example but not limited to, a mouse, keyboard, scanner, microphone, camera, etc. Furthermore, the I/O devices 630 may also include output devices, for example but not limited to a printer, display, etc. Finally, the I/O devices 630 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 630 also include components for communicating over various networks, such as the Internet or intranet.

If the computer 600 is a PC, workstation, intelligent device or the like, the software in the memory 620 may further include a basic input output system (BIOS) (omitted for simplicity). The BIOS is a set of essential software routines that initialize and test hardware at start-up, start the O/S 650, and support the transfer of data among the hardware devices. The BIOS is stored in some type of read-only-memory, such as ROM, PROM, EPROM, EEPROM or the like, so that the BIOS can be executed when the computer 600 is activated.

When the computer 600 is in operation, the processor 610 is configured to execute software stored within the memory 620, to communicate data to and from the memory 620, and to generally control operations of the computer 600 pursuant to the software. The application 680 and the O/S 650 are read, in whole or in part, by the processor 610, perhaps buffered within the processor 610, and then executed.

When the application 680 is implemented in software it should be noted that the application 680 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 680 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-2, and the devices of Figs. 5A and 5B, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 6 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

## Claims

1. A method for training a machine-learning model for detecting audio of a target classification, the method comprising:
training, on a set of training data, a pre-trained audio-classification machine-learning model to predict whether an input audio signal comprises audio meeting the target classification, wherein the set of training data comprises at least one audio signal comprising audio meeting the target classification; and
**characterized in that** the training comprises quantization-aware training wherein at least one learnable value or activation of the model is quantized.

2. The method of claim 1, wherein the at least one learnable value comprises at least one of: a node weight; a bias; a batch normalization parameter; a gating or masking parameter; and a threshold.

3. The method of any prior claim wherein the target classification comprises an infant crying.

4. The method of any prior claim, wherein the set of training data comprises at least one audio signal not meeting the target classification.

5. The method of any prior claim, wherein prior to training, the method further comprises converting the audio signals of the set of training data to float tensors.

6. The method of any prior claim, wherein prior to training, the method further comprises resampling the audio signals of the set of training data to 16kHz single-channel audio signals.

7. The method of any prior claim, wherein the method further comprises obtaining the set of training data.

8. A computer program comprising code means for implementing the method of any preceding claim when said program is run on a processing system.

9. A computer program comprising code means for implementing a machine-learning model trained according to the method of any of claims 1 to 7.

10. A device comprising a machine-learning model trained according to the method of any of claims 1 to 7.

11. The device of claim 10, wherein the device is configured to, in response to detecting audio of the target classification, output a control signal.

12. The device of claim 11, wherein the control signal comprises a signal for outputting an alert.

13. The device of any of claims 10 to 12, wherein the device is configured to classify audio signals in real-time.

14. The device of any of claims 10 to 13, wherein the device comprises a baby monitor.

15. The device of any of claims 10 to 13, wherein the device consists of a processor.
